# DEMANDE DE BREVET EUROPEEN

(11) **EP 0 997 604 A1**
(43) Date de publication de la demande: **03.05.2000**
(21) Numéro de dépôt: 99420206.7
(22) Date de dépôt: 11.10.1999
(51) Int. Cl.: E06B 9/17

(54) **Dispositif de fixation d'un caisson de volet roulant, notamment sur une traverse haute d'huisserie**

(30) Priorité: 09.10.1998 FR 9812906
(71) Demandeur: Ecran System (Sarl), 24700 Montpon Menesterol (FR)
(72) Inventeur: Buffet, Bernard, 24700 montpon Menesterol (FR); Dubuy, Freddy, 42350 La talaudiere (FR)
(74) Mandataire: Thivillier, Patrick

(57) **Abrégé**

Le dispositif de fixation d'un caisson de volet roulant notamment, sur une traverse haute (5) d'huisserie, ladite traverse étant équipée, sur la totalité de sa longueur d'un élément de renfort (6) faisant office de raidisseur, est remarquable en ce qu'il comprend au moins un organe d'assemblage (7) apte à coopérer avec des agencements complémentaires que présentent la face de dessous du caisson (1) et la face de dessus de l'élément de renfort (6).

## Description

L'invention se rattache au secteur technique des caissons dans lesquels est monté un tambour d'enroulement susceptible de recevoir un volet, store, persienne, panneau, ou autre, composé généralement d'une pluralité de lames articulées.

Plus particulièrement, l'invention trouve une application avantageuse dans le cas de caissons en PVC destinés à recevoir un volet roulant.

Comme indiqué, ce type de caisson est conformé pour permettre l'enroulement d'une manière manuelle ou d'une manière motorisée, d'un tablier constitué d'une pluralité de lames articulées entre elles. L'ensemble du caisson est destiné à être monté dans un plan horizontal au-dessus de la traverse haute de l'huisserie. Dans le cas d'un caisson en PVC notamment, ce dernier est prépositionné au-dessus de la traverse haute de l'huisserie, préalablement montée au niveau de l'ouverture à équiper. Ce montage s'effectue avant mise en place de l'isolation et du doublage des murs intérieurs, de sorte que l'ensemble du caisson et de l'huisserie apparaît en débordement du mur intérieur de la pièce, de sorte que le caisson est accessible d'un côté et de l'autre. On observe également que la traverse haute de l'huisserie, notamment si cette dernière est réalisée en PVC, est équipée sur la totalité de sa longueur d'un élément de renfort faisant office de raidisseur, et rendu obligatoire par la réglementation actuellement en vigueur.

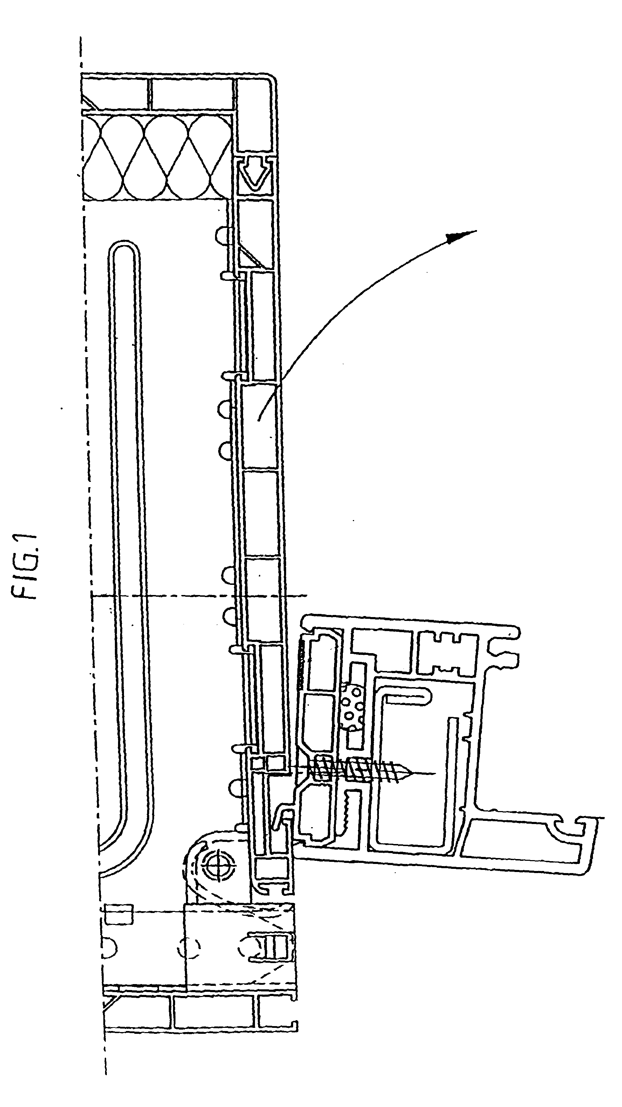

La solution technique généralement employée pour tenter d'assurer la liaison entre le caisson et la traverse haute de l'huisserie ne donne pas satisfaction. En effet, comme le montre la figure 1, selon l'état de la technique, le prépositionnement du caisson par rapport à la traverse haute de l'huisserie s'effectue par un système de crochetage et de mise en place sous un effet de basculement de l'ensemble du coffre par rapport à l'huisserie. Le blocage transversal du coffre par rapport à la traverse haute de l'huisserie s'effectue au moyen de vis mises en place à l'intérieur du coffre et traversant la face de dessous de ce dernier pour être vissée dans la traverse haute de l'huisserie, notamment au niveau des éléments de renfort. Très souvent, des rubans du type autoagrippant, sont également utilisés en tant que complément de fixation.

Cette solution est peu efficace. En effet, compte tenu des difficultés de mise en place des vis, nécessitant d'avoir un accès à l'intérieur du caisson, et effectuer différentes opérations de préperçage, ces vis ne sont pas utilisées, de sorte que la fixation s'effectue seulement au moyen du système de rubans autoagrippants. Il en résulte qu'il n'y a pas de réelle fixation et d'accouplement du caisson par rapport à la traverse haute de l'huisserie. Des problèmes d'étanchéité peuvent également apparaître.

L'invention s'est fixée pour but de remédier à ces inconvénients d'une manière simple, sûre, efficace et rationnelle.

Le problème que se propose de résoudre l'invention est d'assurer une fixation simultanée du caisson par rapport à la traverse haute de l'huisserie, d'une manière simple et avec une très grande précision.

Pour résoudre un tel problème, il a été conçu et mis au point un dispositif de fixation qui comprend au moins un organe d'assemblage apte à coopérer avec des agencements complémentaires que présentent la face de dessous du caisson et la face de dessus de l'élément de renfort qui équipe la traverse haute de l'huisserie.

Pour résoudre le problème posé d'assurer le blocage en position transversale du caisson par rapport à l'ensemble d'huisserie, le (ou les) organe(s) d'assemblage est (ou sont) constitué(s) par une (ou des) clavette(s) profilée(s) en section transversale de manière à assurer l'accouplement du caisson et de la traverse haute, après engagement dans les agencements complémentaires.

Avantageusement, la (ou les) clavette(s) d'assemblage est (ou sont) profilée(s) transversalement en H, de sorte que ses ailes parallèles sont disposées dans un plan horizontal pour être engagées dans les agencements du caisson et de la traverse.

Pour résoudre le problème posé d'assurer l'accouplement du caisson par rapport à l'élément de renfort de la traverse haute de l'huisserie au moyen de la ou des clavettes profilées en H, les agencements du caisson et de l'élément raidisseur de la traverse, sont constitués par une rainure profilée en T, de manière à correspondre à la section transversale en H renversé de la clavette, après positionnement du coffre par rapport à la traverse haute.

A partir de cette conception de base, soit la clavette a une longueur correspondant plus ou moins à celle du caisson et de la traverse, soit la clavette est en plusieurs éléments indépendants engagés sur une partie de la longueur des rainures en T du caisson et de l'élément de renfort de la traverse haute.

L'invention est exposée ci-après plus en détail à l'aide des figures des dessins annexés dans lesquels :
- la figure 1 est une vue en coupe partielle montrant une solution selon l'état de la technique pour le montage du caisson par rapport à la traverse haute de l'huisserie ;

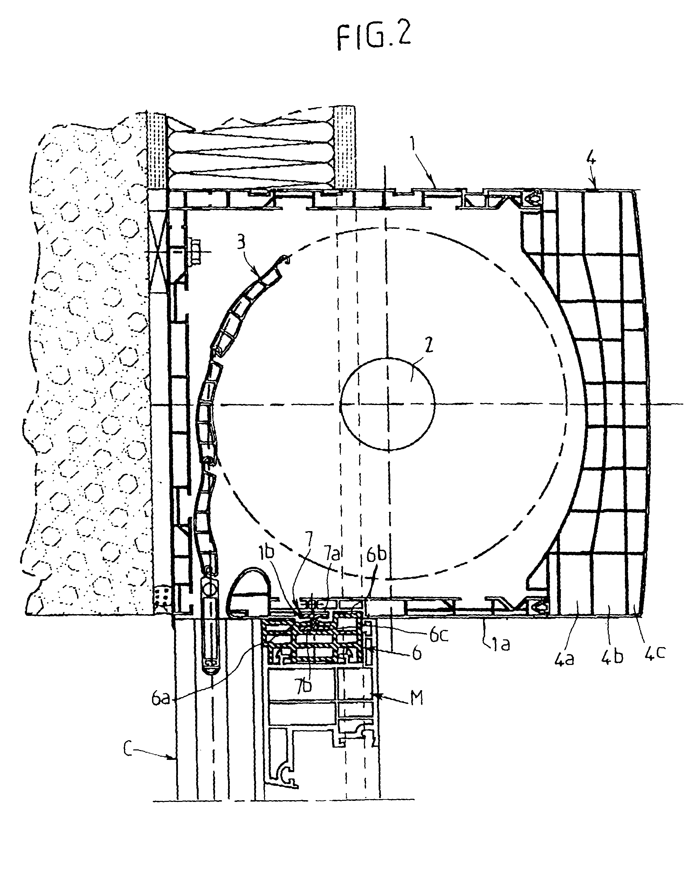

- la figure 2 est une vue partielle et en coupe montrant le montage d'un caisson de volet roulant par rapport à la traverse haute d'une huisserie, au moyen du dispositif selon l'invention ;
- la figure 3 est, à une échelle plus importante, une vue partielle et en coupe montrant le principe d'accouplement au moyen du dispositif selon l'invention ;

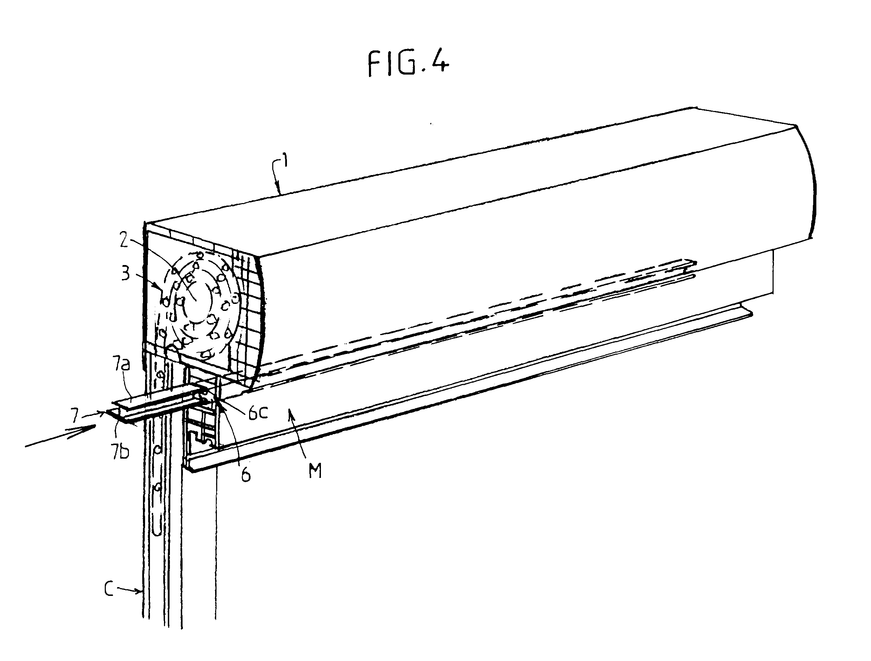

- la figure 4 est une vue partielle en perspective, à caractère schématique, montrant l'introduction de la clavette entre le caisson et la traverse haute.

L'ensemble du caisson se présente sous forme d'un coffre (1) à l'intérieur duquel est monté, avec capacité d'entraînement en rotation, un arbre (2), recevant avec capacité d'enroulement une pluralité de lames articulées (3) constituant le volet en tant que tel. Dans la forme de réalisation illustrée, la face latérale du caisson située du côté interne, c'est-à-dire du côté intérieur, en considérant la pièce où se trouve l'huisserie, est obturée par un élément protecteur (4) faisant office de cache. L'élément (4) présente, dans son épaisseur, des agencements internes obtenus directement par moulage pour assurer l'isolation thermique ou phonique. Ces agencements sont constitués par plusieurs rangées d'alvéoles (4a - 4b - 4c) .... qui s'étendent sur la totalité de la longueur des éléments (4). Bien évidemment, cette forme de réalisation ne doit pas être considérée comme strictement limitative. La face (la) du caisson présente latéralement une fente (la) pour le débordement des lames articulées (3) afin que ces dernières soient engagées dans des coulisses (C) que présente l'ouverture équipée de l'huisserie désignée dans son ensemble par (M).

Avantageusement, l'ensemble du caisson est réalisé en PVC.

De même, l'huisserie (M) est de tout type connu et approprié et est également réalisée en PVC ou matériau similaire. Cette huisserie (M) présente notamment une traverse inférieure basse et une traverse supérieure haute (5). D'une manière connue, la traverse haute (5) est équipée, sur la totalité de sa longueur, d'un élément de renfort (6) faisant office de raidisseur. Cet élément de renfort (6) présente avantageusement une structure transversale du type alvéolaire. De même, d'une manière connue, la face de dessous (la) du caisson (1) et la face de dessus de l'élément raidisseur (6) présentent des agencements complémentaires (1b - 6a) aptes à assurer le prépositionnement de l'ensemble du coffre par rapport à la traverse haute.

Selon une caractéristique, à la base de l'invention, après prépositionnement du caisson (1) par rapport à la traverse haute, il convient d'assurer l'accouplement dudit caisson et de ladite traverse. Dans ce but, le dispositif de fixation comprend au moins un organe d'assemblage (7) apte à coopérer avec des agencements complémentaires que présente la face de dessous (la) du caisson (1) et la face de dessus (6b) de l'élément de renfort (6).

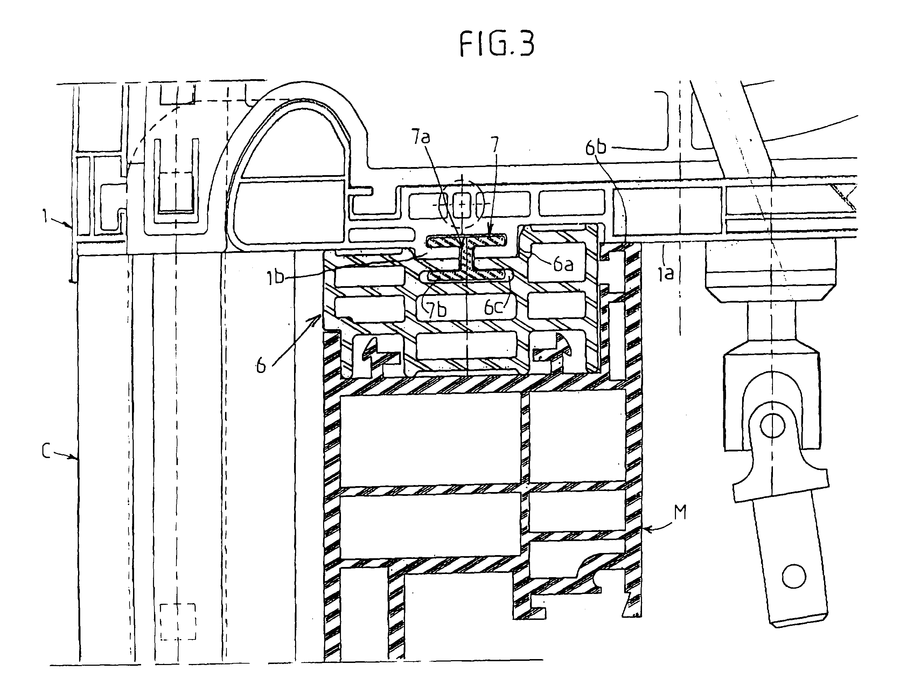

Dans ce but, l'organe d'assemblage (7) est constitué par une clavette dont la section transversale présente un profil déterminé pour assurer l'accouplement du caisson et de la traverse haute, après engagement des agencements complémentaires. Comme le montre la figure 3, la clavette (7) est profilée transversalement en forme de H. Les ailes (7a et 7b) du profil en H sont disposées dans un plan horizontal pour être engagées dans les agencements du caisson (1) et de la traverse haute (5) notamment les agencements de l'élément raidisseur (6). Les agencements de l'élément raidisseur (6) et de la face de dessous (la) du caisson sont constitués par une rainure profilée en T (6c) et (1c). Après positionnement de l'ensemble du coffre (1) par rapport à l'élément raidisseur (6), les deux rainures profilées en T (6c) et (1c). correspondent à la section transversale en H de la clavette (7).

La clavette (7) a une longueur correspondant très sensiblement à celle du caisson (1) et de la traverse (5), plus particulièrement de l'élément raidisseur (6). A noter que la clavette (7) peut être en plusieurs éléments indépendants engagés sur une partie de la longueur des rainures en T (1c et 6c) du caisson avec l'élément de renfort (6).

L'utilisation du dispositif d'assemblage selon l'invention est particulièrement simple, rapide et efficace. Après avoir positionné l'ensemble du caisson (1) sur l'élément raidisseur (6), au moyen des agencements (1b et 6a), il suffit d'engager latéralement la clavette (7) à partir de l'un des côtés de l'huisserie, au travers de l'empreinte en H délimitée par le positionnement tête-bêche des deux rainures profilées en T (6c et 1c). Cet engagement est possible étant donné que l'on a un libre accès à l'ensemble de l'huisserie notamment au niveau du caisson et de la traverse haute, étant donné que le doublage du mur. intérieur n'est pas encore réalisé. On obtient ainsi un blocage transversal automatique du caisson par rapport à la traverse haute. La fixation longitudinale du caisson par rapport à la traverse haute s'effectue, d'une manière connue, au moyen de deux éclisses coopérant avec les panes de l'huisserie.

Les avantages ressortent bien de l'invention. En particulier on souligne et on rappelle :
* l'accouplement simultané du caisson par rapport à la traverse haute ;
* une plus grande précision au niveau du positionnement ;
* un gain de temps important au niveau de l'installation étant donné qu'il n'est plus nécessaire de percer et de visser ;
* une plus grande surface de solidarisation, ce qui a pour effet d'augmenter la qualité de l'accouplement obtenu.

## Revendications

1. Dispositif de fixation d'un caisson de volet roulant notamment, sur une traverse haute (5) d'huisserie, ladite traverse étant équipée, sur la totalité de sa longueur d'un élément de renfort (6) faisant office de raidisseur, caractérisé en ce qu'il comprend au moins un organe d'assemblage (7) apte à coopérer avec des agencements complémentaires que présentent la face de dessous du caisson (1) et la face de dessus de l'élément de renfort (6).

2. Dispositif selon la revendication 1, caractérisé en ce que le (ou les) organe(s) d'assemblage est (ou sont) constitué(s) par une (ou des) clavette(s) profilée(s) en section transversale (7) de manière à assurer l'accouplement du caisson (1) et de la traverse haute (5), après engagement dans les agencements complémentaires.

3. Dispositif selon la revendication 2, caractérisé en ce que la (ou les) clavette(s) d'assemblage (7) est (ou sont) profilée(s) transversalement en H, de sorte que ses ailes parallèles (7a et 7b) sont disposées dans un plan horizontal pour être engagées dans les agencements du caisson (1) et de la traverse (5).

4. Dispositif selon les revendications 1 et 3, caractérisé en ce que les agencements du caisson (1) et de l'élément raidisseur (6) de la traverse, sont constitués par une rainure profilée en T (1c - 6c), de manière à correspondre à la section transversale en II renversé de la clavette (7), après positionnement du coffre (1) par rapport à la traverse haute (5).

5. Dispositif selon la revendication 2, caractérisé en ce que la clavette a une longueur correspondant sensiblement à celle du caisson (1) et de la traverse (5).

6. Dispositif selon la revendication 2, caractérisé en ce que la clavette (7) est en plusieurs éléments indépendants engagés sur un partie de la longueur des rainures en T du caisson (1) et de l'élément de renfort (6) de la traverse haute.
